# EUROPEAN PATENT SPECIFICATION

(11) **EP 1 955 906 B1**
(45) Date of publication and mention of the grant of the patent: **16.06.2010**
(21) Application number: 08380006.0
(22) Date of filing: 15.01.2008
(51) Int. Cl.: B60R 21/09, B60T 7/06, B60T 11/18, G05G 1/32

(54) **Device for the articulated connection between a pedal and a corresponding operating rod**
Vorrichtung zur beweglichen Verbindung zwischen einem Pedal und einer entsprechenden Betätigungsstange
Dispositif pour la connexion articulée entre une pédale et une tige fonctionnelle correspondante

(30) Priority: 06.02.2007 ES 200700314
(43) Date of publication of application: 13.08.2008
(73) Proprietor: Flexngate Automotive Iberica, S.A., 08520 Les Franqueses Del Valles (ES)
(72) Inventor: Nicolas Domingo, Joaquin, 08390 Montgat (ES); Canals Riba, Antoni, 08009 Barcelona (ES); Boquet Carretero, Marcal, 08301 Mataro (ES); Sells Hidalgo, Lluis, 08960 Sant Just Desvern (ES)
(74) Representative: Sugrañes Patentes y Marcas

(56) References cited:
- EP-A- 1 247 701
- WO-A-02/30718
- WO-A-2005/100091

## Description

### Technical field of the invention

The invention relates to a device for the articulated connection between a vehicle control pedal and an operating rod which transmits the turning movement of the pedal to a device on the vehicle, for example a braking device.

The device is of the type which comprises a body which retains the bulged end of the operating rod featuring a compartment into which the aforementioned bulged end is inserted, it being possible for the same to rotate, and a means for retaining the same within the compartment. The invention also relates to a system for the detachment of a vehicle control pedal from the operating rod which connects and transmits the operating force exerted on the pedal, in the event of the vehicle being involved in a collision, wherein the operating rod is connected to the pedal by means of a device in accordance with the invention.

### Background of the invention

Patent document WO 2005100091 A1 discloses a system which releases the control pedal of a device from the device whereto it is linked, particularly applicable to vehicle pedals designed to receive pressure from a foot and to transmit the force of the latter to a device, such as a braking device, by means of an operating rod articulatedly connected to the pedal. The detachment of the pedal from the device whereto it is linked allows the pedal to turn freely around its rotation axis and in this way to protect the driver from the harm that the pedals might cause him/her in the event of the vehicle being involved in a collision and the structure of the vehicle whereon the pedal is mounted becoming distorted, the pedal thus moving towards the driver.

In this system disclosed in document WO 2005100091 A1, the pedal is linked to the device by means of a rod whose end is linked to a first rotation body laterally coupled to the pedal, this being able to turn with regard to an axle. The end of the rod is tightly housed in a slot featured by said first rotation body.

The system also comprises a second rotation body, this being able to turn around the same axle as that of the first rotation body, which comprises a thrusting element formed by a curved wall which, in the event of the second rotation body turning due to a collision of the vehicle, acts as a cam against the rod and thrusts the same, displacing it from the slot at the end of the first rotation body and, therefore, disengaging the control pedal from the device whereto it was linked.

In accordance with the above, the force exerted on the rod in order to displace it from the slot at the end of the first rotation body is essentially transversal to the longitudinal axis of said rod, and once its head has been extracted from said slot, it no longer interferes with the path of the pedal, which may turn freely around its rotation axis.

However, there exist other types of connection between a rod and a control pedal wherein the rods are not connected laterally to the pedal, for example by means of a rotation body, as is the case with the system disclosed above.

With the aim of increasing the degrees of free movement in the connection between the rod and the pedal, rods featuring an essentially spherical end are also used; these are called spherical or ball terminals, which are articulatedly coupled to the pedal by means of a body which retains the essentially spherical end of the rod, this being able to turn; said body being adapted so as to be affixed firmly to the body of the pedal and featuring a compartment for the spherical end of the rod, the result of this being a ball joint. Said retaining body is conventionally formed by a piece of plastic material, generally parallelepipedic in shape, which comprises a means for its press-fitting into the body of the brake pedal. Examples of this type of retaining body are disclosed in document EP0229350-B1.

Document EP0229350-B1 discloses a retaining body for the connection between a pedal and a corresponding rod, formed in a single piece, featuring a hemispherical compartment adapted for press-fitting to the pedal and essentially in the direction of the longitudinal axis of the rod.

Also known are embodiments in which, with the single purpose of facilitating assembly, the retaining body is comprised of two parts, the first of these for coupling to the pedal and the second designed to be articulatedly coupled to the bulged end of the rod, both parts being adapted so as to couple together in the direction of the longitudinal axis of the rod, this coupling being permanent.

Although systems are known which disengage a pedal and a corresponding rod in the event of the vehicle being involved in a collision, particularly applicable to those vehicles wherein the connection between these components is carried out by means of a body for the retaining of the bulged end of the rod, no systems are known wherein the end of the rod is displaced laterally, in a direction perpendicular to the plane of rotation of the pedal, as occurs in the system disclosed in patent WO 2005100091 A1. It is of paramount importance that in addition to disabling the connection between the rod and the pedal, the former should not hinder the free movement of the pedal and, in particular, the turning of the pedal in the direction away from the driver of the vehicle when a collision occurs.

### Explanation of the invention

With the aim of providing a solution to the problems outlined, a device is disclosed which comprises a retaining body for the bulged end of the operating rod of a vehicle pedal, featuring an open compartment, designed to house the aforementioned bulged head, and a retaining means for said head.

In essence, the device if characterised in that the retaining body is comprised of at least one first and one second complementary parts which fit removably together, designed to remain tightly joined under normal conditions of operation of the vehicle, the first part being equipped with means for the permanent joining of the same to the aforementioned control pedal, and both parts, first and second, with complementary removable joining means for their joining together and/or the second part featuring removable means for its joining to the pedal or to an element solidly joined to the pedal under normal operating conditions of the vehicle, this second part being detachable or removable from the first part, in a direction essentially parallel to the plane of the aperture of the compartment when it receives a thrusting force, applied to a lateral wall of the aforementioned compartment, in the direction of its detachment, caused for example by the lateral movement of an operating rod, whose bulged head has been inserted into the compartment of the retaining body, as a consequence of a collision of the vehicle.

In accordance with another characteristic of the invention, the compartment for the bulged head of the operating rod is formed in its entirety in the second part of the retaining body.

In accordance with another characteristic of the invention, the retaining means for the head are distributed between the first and second parts of the retaining body.

Another aspect to be highlighted with regard to the device which is the object of this invention is that the aforementioned compartment in the retaining body is of a generally hemispherical shape, adapted to tightly house a bulged head of an operating rod, of a generally spherical shape.

The device is further characterised in that the aforementioned first and second complementary parts of the retaining body fit together approximately according to a plane parallel to that of the pedal movement.

Another object of this invention is a system for the disengaging of a vehicle control pedal from the rod which connects and transmits the operating forces exerted on the pedal, in the event of the vehicle suffering a collision, the rod being of the type which features a bulged head at its free end.

In essence, said system is characterised in that it comprises a device as described above, which houses and retains the head of the rod and maintains the articulated coupling between the aforementioned rod and the pedal, a first part of those which constitute the retaining body of the device being solidly and permanently joined to the pedal, while a second part, which is complementary to the first, is removably fixed to the first part and/or to the pedal or to an element solidly joined to the pedal under normal operating conditions of the vehicle; and a first-class thrusting lever, assembled so as to turn on an axle, provided with a power arm which may receive the thrust of a non-deformable part of the vehicle as a consequence of a collision, and a load arm shaped like a cam and adapted to act transversally on a portion of the rod which is adjacent to the head housed in the retaining body, all of this in such a way that when the vehicle is involved in a collision, the aforementioned second part of the retaining body receives a thrust transmitted by the rod, which in turn receives it from the aforementioned thrusting lever, which disables the removable fixture of the second part to the first and/or to the pedal or the element solidly joined to the pedal and brings about the detachment of said second part from the retaining body and, therefore, the freeing of the articulated coupling between the rod and the pedal.

It being possible to separate the complementary parts in a direction perpendicular to the plane of movement of the pedal, it is made possible for the head of the operating rod to also become detached from the pedal in the same direction, the pedal then being able to turn freely around its axle without being hindered by the bulged end of the rod.

In accordance with another characteristic of the invention, the separation brought about by the detachment of the second part of the retaining body, removably fixed to the first part and/or the pedal or to an element solidly joined to the pedal, is irreversible.

In accordance with an embodiment of the invention, the rotation axis of the thrusting lever is arranged on the pedal, is parallel to the rotating axle of said pedal and is arranged at a level which is lower than the level of the compartment of the retaining body when in its position of being coupled to the pedal.

In accordance with another characteristic of the invention, the second part of the retaining body is removably fixed to the thrusting lever.

### Brief description of the drawings

In the attached drawings, as a non-limitative example, an embodiment is portrayed of a device in accordance with the invention, and of a system for the disengaging of a pedal from a corresponding rod, connected to the pedal by means of a device in accordance with the invention. In said drawings:
Figure 1, is a perspective view of the retaining body of a device in accordance with the invention, constituted of two parts, said parts being tightly joined;
Figure 2, is a perspective view of the retaining body in Figure 1, the two parts of which it is constituted being separated;
Figure 3, is a perspective view of the retaining body in Figure 2, from the opposite angle;
Figure 4, is a perspective view of a system for the disengaging of a pedal from a rod, wherein said rod is connected to the pedal by means of a device in accordance with the invention;
Figure 5, is a detailed view of the system in Figure 4, from the opposite angle;
Figure 6, is a perspective view of the system in Figure 4, in a situation in which the rod and the pedal are disengaged; and
Figure 7, is a top sectional view of the system portrayed in Figure 6.

### Detailed description of the drawings

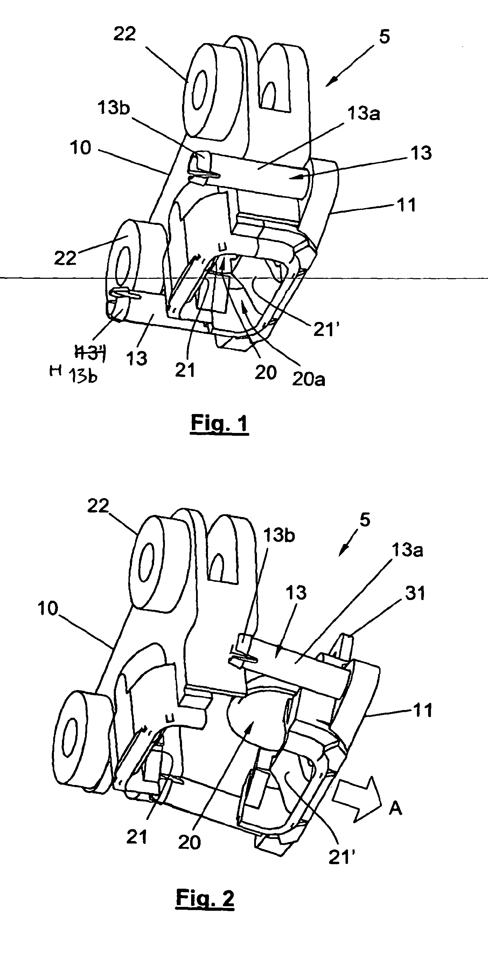

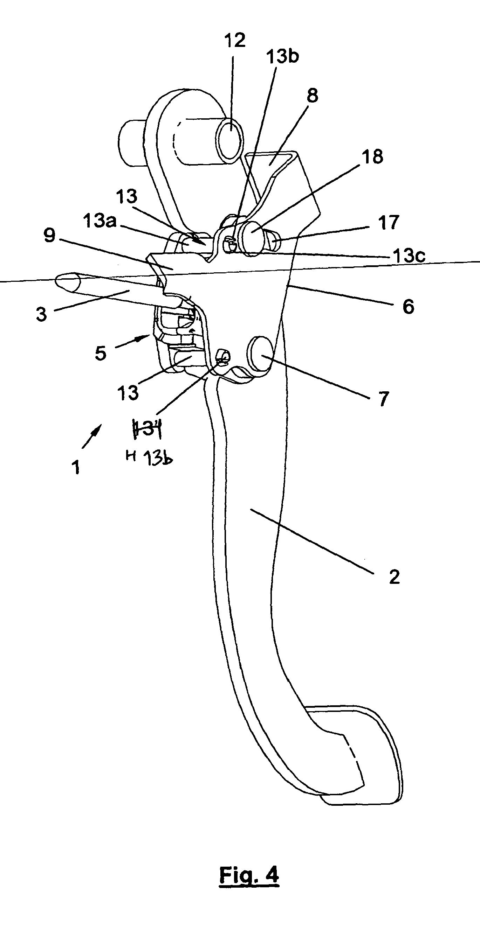

Figure 1 portrays the retaining body 5 of a device in accordance with the invention, designed to receive the insertion of the bulged head of an operating rod of a vehicle pedal, portrayed in Figures 4 to 7. The retaining body 5 features a compartment 20, featuring an aperture 20a, designed to house the head of the aforementioned operating rod, which is insertable into the retaining body 5 through the aperture 20a. The retaining body 5 also features retaining means 21, 21' for the head 4, which prevent its removal from the compartment 20, constituted in the example of two tongues which are elastically deformable in the direction of the insertion of the head into the compartment 20, and which hold the former inside the latter with turning ability.

Characteristically, the retaining body 5 is constituted of a first part 10 and a second part 11, complementary to each other, which fit removably together approximately in accordance with a plane parallel to that of pedal movement, designed to remain tightly joined under normal operating conditions of the vehicle.

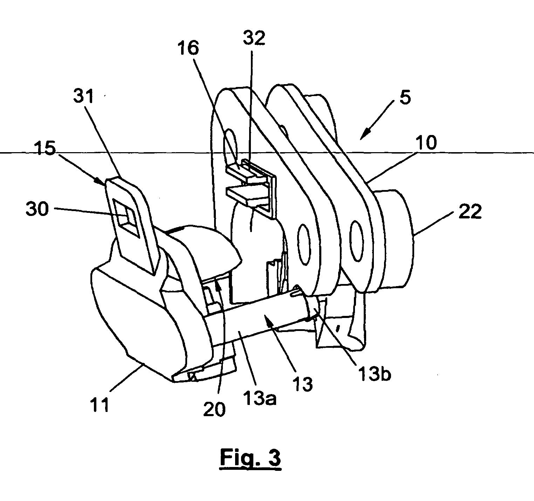

The first part 10 of the retaining body 5 features means 22 for the permanent joining of the same to the body of the pedal, while the second part 11 of the retaining body 5 features a removable joining means 13, described in detail below, joining it to an element solidly joined to the pedal under normal operating conditions of the vehicle. Both first and second parts 10 and 11 also feature removable joining means 15 complementary to each other, visible in Figure 3, by which said first and second parts 10 and 11 may be tightly joined together. The removable joining means 15 is comprised, in the example of Figures 1 to 3, of a slot 30 made in a protruding tab 31 provided on the second part 11 of the retaining body 5, adapted to receive a pair of lugs 16 provided back-to-back on the first part 10 of the retaining body 5; said lugs being elastically deformable and featuring respective barbs 32. Said lugs 16 are adapted so as to be inserted through the slot 30 of the second part 11 when both first and second parts 10 and 11 are juxtaposed in such a way that the barbs penetrate through the slot 30, preventing the removal of the lugs, as these recover their normal position, and the barbs 32 being held against the edges or the profile of the slot 30, and, therefore, preventing the separation of both parts 10 and 11 of the retaining body 5.

In Figures 2 and 3, the second part 11 of the retaining body 5 has been portrayed detached from the first part 10 according to a direction which is essentially parallel to the plane of the aperture 20a of the compartment 20, a situation brought about when, the first and second parts 10 and 11 being mutually joined together, the retaining body 5 receives a thrusting force, applied on a lateral wall of the compartment 20 in the direction of the detachment, as shown by arrow A in Figure 2, caused for example by the lateral movement of an operating rod whose head is housed in the compartment 20 of the retaining body 5, as a consequence of a collision of the vehicle, as shall be described below.

It may also be observed in the aforementioned Figures 2 and 3 that the compartment 20 for the bulged head of the operating rod 3 is formed in its entirety in the second part 11 of the retaining body 5. Conversely, one tongue 21' of the retaining means for the head is featured on the second part 11 of the retaining body 5, while the other tongue 21 is located on the first part 10.

It may also be observed in Figures 1 and 2 that the compartment 20 is of a generally hemispherical shape, it being designed to tightly house the essentially spherical bulged head of an operating rod, in correspondence with the internal shape of the compartment 20, and to allow a free turning movement of the aforementioned head in its interior.

The permanent joining means 22 to the body of the pedal featured by the first part 10 consists of holes designed to be traversed by respective pins or axles which traverse the body of the pedal.

On the other hand, the removable joining means 13 to the pedal or to an element solidly joined to the pedal, provided on the second part 11 of the retaining body 5, consist of a pair of cylindrical rods 13a featuring at their ends respective truncated cone-shaped heads 13b, elastically deformable inwards, whose bases are of a diameter greater than that of the respective rods, these being designed to traverse corresponding through-holes made in a rigid component of the pedal, the truncated cone-shaped heads 13b acting as a non-return means.

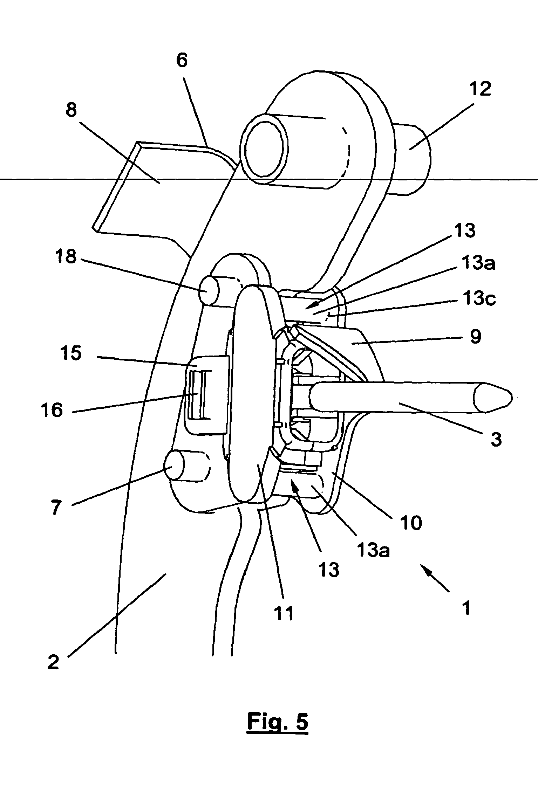

Portrayed in Figures 4 and 5 is a system 1 for the disengaging of a vehicle control pedal 2 from the rod 3 which connects and transmits to a mechanism (not portrayed in the Figures) of the vehicle the operating forces exerted on the pedal 2, in the event of the vehicle being involved in a collision.

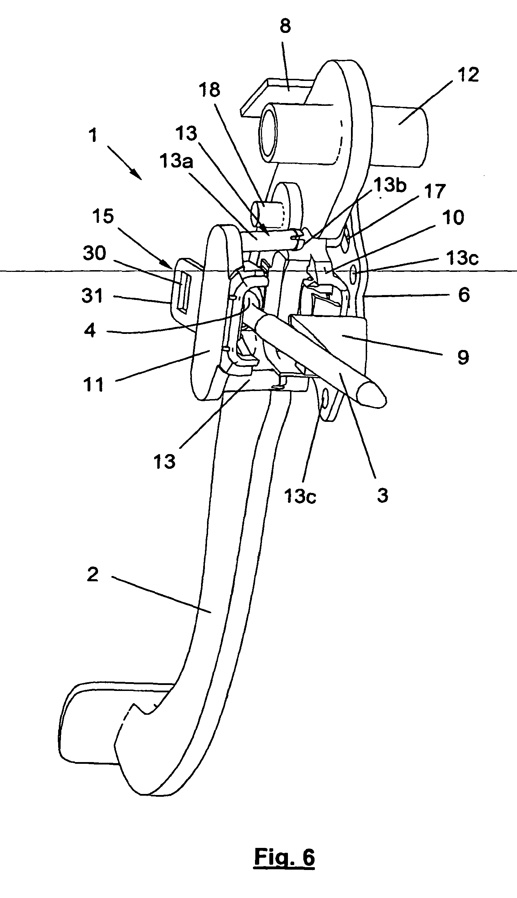

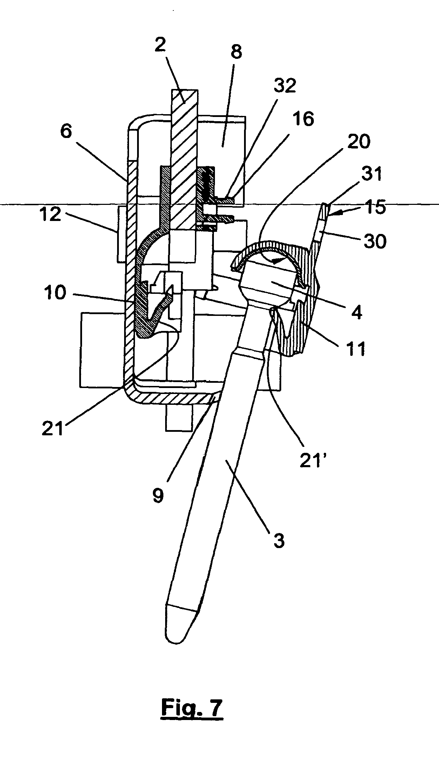

The rod 3 features at its end a bulged essentially spherical head 4, visible in Figures 6 and 7, and it is connected to the pedal 2 by means of a device comprised of a retaining body 5 such as that portrayed in Figures 1 to 3. In the operative situation of the pedal, as portrayed in Figures 4 and 5, the first part 10 of the retaining body 5 is firmly attached to the pedal 2 and the head 4 of the rod 3 is inserted into the compartment 20, held in its interior by tongues 21 and 21'.

As may be observed in Figures 4 to 7, the system 1 features a first-class thrusting lever 6 which may rotate around an axle 7 arranged on the pedal 2, parallel to the turning axle 12 of said pedal 2 and arranged at a level lower than that of the compartment 20 of the retaining body 5. The thrusting lever 6 features a power arm 8, which may receive the thrust from a non-deformable part of the vehicle when the supporting structure of the axle 12 of the pedal 2 becomes distorted as a consequence of a collision, and a load arm 9 shaped like a cam and adapted to act transversally on a portion of the rod 3 which is adjacent to the head 4.

Under normal operating conditions of the vehicle, the thrusting lever 6 is solidly fixed to the pedal 2 by means of the removable joining means 13 featured on the second part 11 of the retaining body 5. It may be seen in Figure 4 that the truncated cone-shaped heads 13b of the aforementioned removable joining means 13 have traversed the corresponding holes 13c made in the thrusting lever 6. In fact, this removable joining means 13 acts as a shearing assembly, as it maintains the thrusting lever 6 solidly joined to the pedal 2 while it is not pushed and turned around its axle 7, the moment when said removable joining means 13 is disabled, there being a relative movement between the thrusting lever 6 and the second part 11 of the retaining body 5.

In Figure 4 it may be seen that the thrusting lever 6 features a slot 17, which is traversed by a pin 18 or similar, solidly joined to the pedal 2, which limits the turning movement of the aforementioned thrusting lever 6 as the pin buttresses against either of the ends of the slot 17.

Although in the embodiment of the example of the system 1, the first and second parts 10 and 11 of the retaining body 5 are tightly joined by means of the complementary removable joining means 16 and at the same time by the removable joint between the second part 11 of the retaining body 5 and the thrusting lever 6, which maintains said second part 11 pressing against the complementary first part 10 of the retaining body, it must be understood that both first and second parts 10 and 11 may remain tightly and separably joined under normal operating conditions of the vehicle, even though the system 1 were lacking in any one of the complementary removable joining means 15 between the first and second parts 10 and 11 of the retaining body 5 or in the removable joining means 13 between the second part 11 of the retaining body 5 and the thrusting lever 6.

In Figures 6 and 7, what happens in the event of the vehicle being involved in a collision has been portrayed. In the event of the aforementioned collision occurring, the power arm 8 of the thrusting lever 6 receives the thrust from a non-deformable part of the vehicle, not portrayed, it being forced to turn around its rotation axis 7. As a consequence of the rotation of the thrusting lever 6, the truncated cone-shaped heads 13b of the removable joining means 13 yield, become distorted and are automatically extracted from the holes 13c in the thrusting lever 6. Simultaneously or almost simultaneously, the load arm 9 of the thrusting lever 6 acts transversally, like a cam, on the portion of the rod 3 adjacent to the head 4, pushing it and moving it until it brings about the separation of the second part 11 of the retaining body 5 from the first part 10, after distorting the tongues 16 which hold both parts 10 and 11 together. Once the removable joining means 15 between the first and second parts 10 and 11 of the retaining body 5 have been disabled, there is no hindrance to the detachment of the second part 11 of the retaining body 5 in the direction of the thrust of the rod 3, and, therefore, the latter may move laterally with regard to the pedal 2, thus severing the connection which existed between said rod 3 and the pedal 2. In consequence, the pedal may turn freely around its rotation axis 12 without fouling the head 4 of the rod 3, which has been removed from its path due to the thrust from the load arm 9 of the thrusting lever 6.

## Claims

1. A device for the articulated connection between a vehicle control pedal and a corresponding operating rod, the device comprising a retaining body (5) featuring a compartment (20), equipped with an aperture (20a) and a retaining means (21, 21') adapted to house and retain, respectively, in the interior of the compartment, and with the ability to rotate, a bulged head of an end of an operating rod, **characterised in that** the retaining body comprises one first and one second complementary parts (10, 11), which fit removably together, designed to remain tightly joined under normal operating conditions of the vehicle, the first part being equipped with a permanent joining means (22) to said operating pedal and both first and second parts with complementary removable joining means (15) to each other and/or the second part being equipped with removable joining means (13) to the pedal or to an element interdependent to the pedal under normal operating conditions of the vehicle, this second part being separable or detachable from the first part in a direction essentially parallel to the plane of the aperture of the compartment when it receives a thrusting force, applied to a lateral wall of the aforementioned compartment, in the direction of the detachment, caused for example by the lateral movement of an operating rod whose bulged end is inserted into the compartment of the retaining body, as a consequence of the vehicle being involved in a collision.

2. A device according to the previous claim, **characterised in that** the compartment (20) for the bulged head of the operating rod is formed in its entirety in the second part (11) of the retaining body (5).

3. A device according to the previous claims, **characterised in that** the retaining means (21, 21') for the head are distributed between the first (10) and second (11) parts of the retaining body (5).

4. A device according to the previous claims, **characterised in that** the compartment (20) is of a generally hemispherical shape, adapted to tightly house the bulged head, of a generally spherical shape, of the operating rod.

5. A device according to the previous claims, **characterised in that** the aforementioned first and second complementary parts (10, 11) of the retaining body (5) fit together approximately in accordance with a plane parallel to that of the pedal movement.

6. A system (1) for the detachment of a vehicle control pedal (2) from the rod (3) which connects and transmits to a mechanism of the vehicle the operating forces exerted on the pedal in the event of the vehicle suffering a collision, the rod being of the type which features at its free end a bulged head (4), **characterised in that** it comprises:
- a device according to claims 1 to 5, which houses and retains the head of the rod and maintains the articulated coupling between the aforementioned rod and the pedal, a first part (10) of those which form the retaining body (5) of the device being solidly and permanently fixed to the pedal, while a second part (11), complementary to the first, is removably fixed to the first part and/or to the pedal or to an element solidly joined to the pedal under normal operating conditions of the vehicle; and
- a thrusting lever (6), rotably assembled on an axle (7), provided with a power arm (8) which may receive the thrust from a non-deformable part of the vehicle as a consequence of a collision, and with a load arm (9) shaped like a cam and adapted to act transversally on a portion of the rod adjacent to the head housed in the retaining body,
all of this in such a way that when the vehicle is involved in a collision, the aforementioned second part of the retaining body receives a thrust transmitted by the rod, which in turn receives the thrust from the aforementioned thrusting lever, which disables the removable fixing of the second part to the first part and/or to the pedal or the element solidly joined to the pedal and brings about the detachment of said second part of the retaining body and, therefore, the freeing of the articulated coupling between the rod and the pedal.

7. A system (1) according to claim 6, **characterised in that** the separation caused by the detachment of the second part (11) of the retaining body (5), removably fixed to the first part (10) and/or to the pedal or to an element solidly joined to the pedal, is irreversible.

8. A system (1), according to claims 5 to 7, **characterised in that** the rotation axis (7) of the thrusting lever (6) is arranged on the pedal (2), is parallel to the rotation axis (12) of said pedal and is arranged at a level lower than the level of the compartment (20) of the retaining body (5) in its position when coupled to the pedal.

9. A system (1) according to claims 5 to 8, **characterised in that** the second part (11) of the retaining body (5) is removably fixed to the thrusting lever (6).

## Patentansprüche

1. Vorrichtung zur gelenkigen Verbindung zwischen einem Fahrzeugsteuerpedal und einer entsprechenden Betätigungsstange, wobei die Vorrichtung einen Rückhaltekörper (5) umfasst, der ein Fach (20) aufweist, das mit einer Öffnung (20a) und Rückhaltemitteln (21, 21') ausgestattet ist, die dazu angepasst sind, jeweils im Inneren des Fachs einen gewölbten Kopf eines Endes einer Betätigungsstange drehbar aufzunehmen und zurückzuhalten, **dadurch gekennzeichnet, dass** der Rückhaltekörper einen ersten und einen zweiten ergänzenden Teil (10, 11) umfasst, welche abnehmbar zusammenpassen, welche ausgelegt sind, um bei normalen Betriebsbedingungen des Fahrzeugs in enger Verbindung bleiben, wobei der erste Teil mit einem Mittel (22) zur dauerhaften Verbindung mit dem genannten Betätigungspedal ausgestattet ist, und sowohl der erste als auch der zweite Teil mit abnehmbaren ergänzenden Mitteln (15) zur gegenseitigen Verbindung ausgestattet sind, und/oder der zweite Teil mit einem abnehmbaren Mittel (15) zur Verbindung mit dem Pedal oder einem mit dem Pedal eng zusammenhängenden Element bei normalen Betriebsbedingungen des Fahrzeugs ausgestattet ist, wobei dieser zweite Teil von dem ersten Teil in einer im wesentlichen zur Ebene der Öffnung des Fachs parallelen Richtung trennbar oder ablösbar ist, wenn er eine Schubkraft aufnimmt, die an eine Seitenwand des zuvor genannten Fachs in Richtung des Ablösens aufgebracht wird, welche zum Beispiel durch die seitliche Bewegung einer Betätigungsstange hervorgerufen wird, dessen gewölbtes Ende in das Fach des Rückhaltekörpers eingeführt wird, infolge dessen, dass das Fahrzeug in eine Kollision involviert ist.

2. Vorrichtung nach dem vorherigen Anspruch, **dadurch gekennzeichnet, dass** das Fach (20) für den gewölbten Kopf der Betätigungsstange in seiner Gesamtheit in dem zweiten Teil (11) des Rückhaltekörpers (5) gebildet ist.

3. Vorrichtung nach den vorherigen Ansprüchen, **dadurch gekennzeichnet, dass** die Rückhaltemittel (21, 21') für den Kopf zwischen dem ersten (10) und dem zweiten (11) Teil des Rückhaltekörpers (5) verteilt sind.

4. Vorrichtung nach den vorherigen Ansprüchen, **dadurch gekennzeichnet, dass** das Fach (20) im allgemeinen die Form einer Halbkugel hat, und dazu angepasst ist, den gewölbten, im allgemeinen kugelförmigen Kopf der Betätigungsstange dicht aufzunehmen.

5. Vorrichtung nach den vorherigen Ansprüchen, **dadurch gekennzeichnet, dass** die zuvor genannten erster (10) und zweiter (11) Ergänzungsteile des Rückhaltekörpers (5) derart zusammenpassen, dass sie ungefähr einer Ebene entsprechen, die zu jener der Pedalbewegung parallel ist.

6. System (1) zum Ablösen eines Fahrzeugsteuerpedals (2) von der Stange (3), welches die auf das Pedal ausgeübten Betätigungskräfte mit einem Mechanismus des Fahrzeugs verbindet und auf diesen überträgt, wenn das Fahrzeug eine Kollision erleidet, wobei die Stange von jener Art ist, welche an ihrem freien Ende einen gewölbten Kopf (4) aufweist, **dadurch gekennzeichnet, dass** es Folgendes umfasst:
- eine Vorrichtung nach den Ansprüchen 1 bis 5, welche den Kopf der Stange aufnimmt und zurückhält, und die gelenkige Kopplung zwischen der zuvor genannten Stange und dem Pedal aufrecht erhält, wobei ein erster Teil (10) derjenigen Teile, welche den Rückhaltekörper (5) der Vorrichtung bilden, fest und dauerhaft an dem Pedal befestigt ist, während ein zweiter Teil (11), welcher den ersten ergänzt, an dem ersten Teil und/oder an dem Pedal oder an einem fest mit dem Pedal verbundenen Element bei normalen Betriebsbedingungen des Fahrzeugs abnehmbar befestigt ist; und
- einen Schubhebel (6), welcher drehbar an einer Achse (7) montiert ist, der mit einem Kraftarm (8) versehen ist, welcher die Schubkraft von einem unverformbaren Teil des Fahrzeugs infolge einer Kollision aufnehmen kann, und mit einem Ladearm (9), der nockenartig geformt und dazu angepasst ist, quer auf einen Teil der Stange einzuwirken, der dem in dem Rückhaltekörper aufgenommenen Kopf benachbart ist,
all dies derart, dass wenn das Fahrzeug in eine Kollision involviert ist, der zuvor genannte zweite Teil des Rückhaltekörpers eine Schubkraft aufnimmt, welche durch die Stange übertragen wird, welche wiederum die Schubkraft von dem zuvor genannten Schubhebel aufnimmt, was die abnehmbare Befestigung des zweiten Teils an dem ersten Teil und/oder an dem Pedal oder dem fest mit dem Pedal verbundenen Element aufhebt, und das Ablösen des genannten zweiten Teils des Rückhaltekörpers und somit die Freigabe der gelenkigen Kopplung zwischen der Stange und dem Pedal herbeiführt.

7. System (1) nach Anspruch 6, **dadurch gekennzeichnet, dass** die durch das Ablösen des zweiten Teils (11) des Rückhaltekörpers (5), das an dem ersten Teil (10) und/oder an dem Pedal oder an einem fest mit dem Pedal verbundenen Element befestigt ist, hervorgerufene Trennung nicht rückgängig gemacht werden kann.

8. System (1) nach den Ansprüchen 5 bis 7, **dadurch gekennzeichnet, dass** die Drehachse (7) des Schubhebels (6) an dem Pedal (2) angeordnet ist, parallel zur Drehachse (12) des genannten Pedals ist und auf einer Höhe angeordnet ist, die niedriger als die Höhe des Fachs (20) des Rückhaltekörpers (5) ist, wenn er in seiner Position mit dem Pedal gekoppelt ist.

9. System (1) nach den Ansprüchen 5 bis 8, **dadurch gekennzeichnet, dass** der zweite Teil (11) des Rückhaltekörpers (5) abnehmbar an dem Schubhebel (6) befestigt ist.

## Revendications

1. Dispositif pour la connexion articulée entre une pédale de contrôle de véhicule et une bielle de commande correspondante, le dispositif comprenant un corps de retenue (5) avec un compartiment (20) équipé d'une ouverture (20a) et un moyen de retenue (21, 21') adaptés pour loger et retenir, respectivement, à l'intérieur du compartiment, en ayant également la capacité de pivoter, une tête bombée d'une extrémité d'une bielle de commande, **caractérisé en ce que** le corps de retenue comprend une première et une deuxième parties complémentaires (10, 11), qui s'ajustent ensemble de manière amovible, conçues pour demeurer étroitement unies sous des conditions opérationnelles normales du véhicule, la première partie étant équipée d'un moyen d'union permanente (22) sur ladite pédale de contrôle, et aussi bien la première que la deuxième parties étant équipées de moyens d'union amovibles complémentaires (15) l'une par rapport l'autre et/ou la deuxième partie étant équipée avec de moyens d'union amovibles (13) sur la pédale ou sur un élément interdépendant sur la pédale sous des conditions opérationnelles normales du véhicule, cette deuxième partie pouvant se séparer ou détacher de la première partie dans une direction essentiellement parallèle au plan de l'ouverture du compartiment lorsqu'elle reçoit une force de poussée, appliquée sur une paroi latérale dudit compartiment, dans la direction du détachement, causée par exemple par le mouvement latéral d'une bielle de commande dont l'extrémité bombée est insérée dans le compartiment du corps de retenue, comme une conséquence de l'implication du véhicule dans une collision.

2. Dispositif selon la revendication précédente, **caractérisé en ce que** le compartiment (20) pour la tête bombée de la bielle de commande est formé dans l'ensemble sur la deuxième partie (11) du corps de retenue (5).

3. Dispositif selon les revendications précédentes, **caractérisé en ce que** les moyens de retenue (21, 21') pour la tête sont réparties entre la première (10) et la deuxième (11) parties du corps de retenue (5).

4. Dispositif selon les revendications précédentes, **caractérisé en ce que** le compartiment (20) est généralement sous forme hémisphérique, adapté pour loger étroitement la tête bombée, d'une forme généralement sphérique, de la bielle de commande.

5. Dispositif selon les revendications précédentes, **caractérisé en ce que** lesdites première et deuxième parties complémentaires (10, 11) du corps de retenue (5) s'ajustent ensemble selon approximativement un plan parallèle à celui du mouvement de la pédale.

6. Système (1) pour le détachement d'une pédale de contrôle (2) de véhicule de la bielle (3) qui connecte et transmet à un mécanisme du véhicule les forces de commande exercées sur la pédale lorsque le véhicule a une collision, la bielle étant du type ayant à son extrémité libre une tête bombée (4), **caractérisé en ce qu'**il comprend :
- un dispositif selon les revendications 1 à 5, qui loge et retient la tête de la bielle et maintient l'accouplement articulé entre ladite bielle et la pédale, une première partie (10) de ceux qui forment le corps de retenu (5) du dispositif étant fixée solidement et en permanence à la pédale, tandis qu'une deuxième partie (11), complémentaire à la première, est fixée amoviblement à la première partie et/ou à la pédale ou à un élément solidement uni à la pédale sous des conditions opérationnelles normales du véhicule ; et
- un levier de poussée (6), assemblée en rotation sur un axe (7), pourvu d'un bras de puissance (8) qui peut recevoir la poussée d'une partie non-déformable du véhicule comme conséquence d'une collision, et avec un bras de charge (8) formé comme une came et adapté pour agir transversalement sur une partie de la bielle attenante à la tête logée dans le corps de retenue, tout cela de manière que lorsque le véhicule est impliqué dans une collision, ladite deuxième partie du corps de retenue reçoive une poussé transmise par la bielle, qui à son tour reçoit la poussée dudit levier de poussée, ce qui annule la fixation amovible de la deuxième partie à la première partie et/ou à la pédale ou à l'élément solidement uni à la pédale et provoque le détachement de ladite deuxième partie du corps de retenue et, en conséquence, la libération de l'accouplement articulé entre la bielle et la pédale.

7. Système (1) selon la revendication 6, **caractérisé en ce que** la séparation causée par le détachement de la deuxième partie (11) du corps de retenu (5), fixée amoviblement à la première partie (10) et/ou à la pédale ou à un élément solidement uni à la pédale, est irréversible.

8. Système (1) selon les revendications 5 à 7, **caractérisé en ce que** l'axe de rotation (7) du levier de poussée (8) disposé sur la pédale (2), est parallèle à l'axe de rotation (12) de ladite pédale et est disposé à un niveau inférieur au niveau du compartiment (20) du corps de retenue (5) dans sa position lorsqu'il est accouplé à la pédale.

9. Système (1) selon les revendications 5 à 8, **caractérisé en ce que** la deuxième partie (11) du corps de retenue (5) est fixée amoviblement au levier de poussée (6).
